# EUROPÄISCHE PATENTSCHRIFT

(11) **EP 1 364 981 B1**
(45) Veröffentlichungstag und Bekanntmachung des Hinweises auf die Patenterteilung: **06.08.2014**
(21) Anmeldenummer: 03011075.3
(22) Anmeldetag: 20.05.2003
(51) Int. Cl.: B01J 31/24, C08F 8/42, B01J 31/22, B01J 31/16, B01J 31/18

(54) **Verfahren zur Herstellung von Polymergerüsten mit daran gebundenen Übergangsmetallen**
Method for preparing polymer structures with bound transition metals
Procédé de préparation de structures polymériques auxquelles sont attachés des métaux de transition

(30) Priorität: 25.05.2002 DE 10223345
(43) Veröffentlichungstag der Anmeldung: 26.11.2003
(73) Patentinhaber: Karlsruher Institut für Technologie, 76131 Karlsruhe (DE)
(72) Erfinder: Walter, Olaf, 76344 Eggenstein-Leopoldshafen (DE); Ahlmann, Martin, 76344 Eggenstein-Leopoldshafen (DE); Dinjus, Eckhard, 76774 Leimersheim (DE)
(74) Vertreter: Fitzner, Uwe

(56) Entgegenhaltungen:
- GB-A- 1 291 237
- US-A- 3 674 768
- US-A1- 2002 022 144
- PATENT ABSTRACTS OF JAPAN vol. 018, no. 506 (C-1252), 22. September 1994 (1994-09-22) & JP 06 170236 A (NICHIBI:KK;OTHERS: 01), 21. Juni 1994 (1994-06-21)

## Beschreibung

Gegenstand der vorliegenden Erfindung sind Polymergerüste mit daran gebundenen Übergangsmetallen, ein Verfahren zu deren Herstellung sowie deren Verwendung.

Polymere als Träger von organischen Bausteinen sind in der Chemie mit der Einführung der Merrifield-Peptidsynthese etabliert (R.B. Merrifield, J.Am. Chem. Soc. 85 (1963) 2149) und haben sich in der Chemie seitdem als Trägermaterialien etabliert (A. Kirschning, H. Monenschein, R. Wittenberg, Angew. Chem. 113 (2001) 670, Angew. Chem. Int. Ed. Engl. 40 (2001) 650; B. Chapman, T.S. Reger, K.D. Janda, Tetrahedron 57 (2001) 4637.).

An Polymere gebundene Übergangsmetallkomplexe haben sich in der jüngeren Vergangenheit eines hohen Interesses seitens der Katalytiker erfreut. Die Motivation für die Durchführung dieser Arbeiten beruht dabei im wesentlichen auf der Verknüpfung der Vorteile der homogenen Katalyse wie hohe Selektivität und Umsätze mit denen aus der heterogenen Katalyse wie leichte Katalysatorabtrennung und Recyclierbarkeit (Ph. Kalck in ,Aequous phase organometallic catalysis', edited by B. Cornils and W. A. Herrmann, Wiley-VCH (1998), 111).

Eine einfache und gute Wiederverwertbarkeit von homogenen Katalysatoren wird auch in Mehrphasenprozessen realisiert, bei denen sich der Katalysator in einer mit dem Edukt und/oder Produkt nicht mischbaren Phase befindet. Als Beispiele dienen hier der SHOP-Prozeß (P.CJ. Kamer, P.W.N.M. van Leeuwen in ,Aequous phase organometallic catalysis', edited by B. Cornils and W.A. Herrmann, Wiley-VCH (1998), 565) und die Hydroformylierung von Propen nach dem Rhöne-Poulenc-Ruhrchemie Verfahren (C.D. Frohning, C.W. Kohpaintner in 'Aequos phase organometallic catalysis', edited by B. Cornils and W.A. Herrmann, Wiley-VCH (1998), p. 297 ff.). Der Nachteil des Rhöne-Poulenc-Ruhrchemie Verfahrens liegt darin, dass die Umsätze für höhere Olefine geringer sind, da ihre Löslichkeit und damit Verfügbarkeit unter den Reaktionsbedingungen in der wässrigen (Katalysator-) Phase gering ist, so dass nur ein unzureichender Substrat-Katalysator-Kontakt hergestellt werden kann (H. Bahrmann, S. Bogdanovic in ,Aequous phase organometallic catalysis', edited by B. Cornils and W.A. Herrmann, Wiley-VCH (1998), 309.).

Ein Ausweg aus dieser Situation kann die Verwendung von Katalysatorsystemen darstellen, die an polymeren Materialien entweder anorganischer (Ph. Kalck in 'Aquous phase organometallic catylysis', edited by B. Cornils and W. A. Herrmann, Wiley-VCH (1998), p.111) oder organischer Grundstruktur (Ph. Kalck in 'Aequous phase organometallic catalysis', edited by B. Cornils and W. A. Herrmann, Wiley-VCH (1998) p. 113 ff) fixiert sind, oder aufgrund ihrer chemischen Struktur als grenzflächenaktive Tensidmoleküle fungieren können (G. Papadogianakis, R. A. Sheldon in 'Aequous phase organometallic catalysis', editedby B. Cornils and W.A. Herrmann, Wiley-VCH (1998), 123 ff.).

Als ein Beispiel für ein tensoides System könnte die Anbindung eines Katalysators an einem amphiphilen Polymermaterial dienen; der unpolare Teil des Polymers baut dabei eine hydrophobe Umgebung auf, um die unpolaren Substratmoleküle über van-der-Waals-Kräfte anzudocken, während die hydrophilen Seitengruppen die Fixierung des Polymers in einer wässrigen Phase erlauben. Ein tensoides System, basierend auf Polyethylenglykolseitenketten ist in der Literatur bis dato beschrieben und auch schon untersucht E.V. Dehmlow in ,Aequous phase organometallic catalysis', edited by B. Cornils and W.A. Herrmann, Wiley-VCH (1998), 218; T. Okano in 'Aequous phase organometallic catalysis', edited by B. Cornils and W. A. Herrmann, Wiley-VCH (1998), 221 ff.; D.E. Bergbreiter, P.L. Osborn, A. Wilson, E.M. Sink, J.Am. Chem. Soc. 122 (2000) 9058; J. A. Loch, C. Borgmann, R.H. Crabtree, J. Mol. Cat.A: Chem. 170 (2001) 75).

Polyvinylalkohol selber ist bisher nur in der Form zur Anbindung von Übergangsmetallen genutzt worden, dass seine oxidierte Form Endiolatstrukturen aufbauen kann, die als chelatiserender Ligand für Übergangsmetallfragmente fungieren können (W.A. Herrmann, C.-P. Reisinger in 'Aequous phase organometallic catalysis', edited by B. Cornils and W.A. Herrmann, Wiley-VCH (1998), 145).

Aus JP 06 170235 A sind acetalisierte Polyvinylalkohole bekannt. Aus US 3,674,768 und GB 1,291,237 sind Polymere bekannt, bei denen die Hydroxylgruppen direkt mit Phosphinen umgesetzt werden.

Aufgabe der vorliegenden Erfindung ist es, Polymergerüste mit daran gebundenen Übergangsmetallen zur Verfügung zu stellen, die sich zur Herstellung von Katalysatoren eignen. Insbesondere sollen Katalysatoren herstellbar sein, die an jeweils gewünschte Bedingungen anpassbar sind.

Diese Aufgabe wird dadurch gelöst, dass das Polymergerüst hydroxylgruppenhaltige Polymere aufweist, deren freie Hydroxylgruppen zumindest teilweise zu zyklischen Acetalen und/oder Ketalen umgesetzt sind, welche donorfunktionalisiert sind, und dass die Übergangsmetalle über die Donorfunktion an das Polymer gebunden sind, wobei die Donorfunktionen Phosphino-Gruppen sind.

Zur Herstellung der erfindungsgemäßen Polymergerüste werden OH-funktionelle Polymere eingesetzt. Beispiele für solche erfindungsgemäß einsetzbaren OH-funktionellen Polymere sind Polyvinylalkohole (PVA), Polysaccharide oder Cellulosederivate.

Erfindungsgemäß besonders bevorzugt sind Polyvinylalkohole, Copolymere des Vinylalkohols, z.B. Copolymer mit Vinylacetat, oder Polysaccharide, insbesondere Cellulose, oder Gemische dieser Stoffe.

Die genannten OH-funktionellen Polymere werden erfindungsgemäß mit Aldehyden, welche wenigstens eine Donorfunktion aufweisen, umgesetzt. Donoren sind Phosphino-Funktionalisierungen.

Erfindungsgemäß kommen auch Aldehyde in Betracht, welche wenigstens eine Halogenfunktion aufweisen.

Beispiele für erfindungsgemäß einsetzbare Aldehyde sind z. B. Halogenacetaldehyde, z.B. Chloracetaldehyd, und Halogenacetaldehyddialkylacetale, z.B. Chloracetaldehyddimethylacetale. Weitere Beispiele sind Halogenbenzaldehyde, z.B. Brombenzaldehyd. Als Halogene kommen neben Chlor auch Fluor, Brom oder Jod in Betracht. Ebenso sind Mehrfachfunktionalisierungen denkbar, wobei hier die genannten Halogene beliebig kombiniert sein können. Unter Umständen ist es auch möglich, vor der Umsetzung mit dem Gerüstpolymer die Halogenfunktionen am Aldehyd zu ändern.

In einem weiteren Schritt werden die Halogenfunktionen in dem Polymergerüst durch die oben erwähnte Donorfunktion ersetzt.

Die Einsatzgebiete der beschriebenen Gerüstpolymere liegen in ihrer Verwendung als Trägermaterial für Übergangsmetalle, die durch Koordination die Donor-Funktionalisierungen geeignete Übergangsmetalle an das Polymer gebunden werden. Die hohe Variationsbreite in der Acetalisierung bzw. Ketalisierung des Polymers erlaubt die Herstellung von Polymergerüsten, die aufgrund ihrer unterschiedlichen Polarität für einen Einsatz in verschiedenen Reaktionsmedien geeignet sind.

An den mit wenigstens einer Donorfunktion versehenen Polymergerüsten werden zur Herstellung der Katalysatoren vorzugsweise Übergangsmetalle gebunden. Hierfür kommen vorzugsweise in Betracht späte da elektronenreiche Übergangsmetallkomplexe. Insbesondere werden bevorzugt Metalle der achten und neunten Nebengruppe. Ganz besonders bevorzugt sind Rhodium, Palladium oder Ruthenium.

Das erfindungsgemäße Polymergerüst beruht nach dem Gesagten auf einer Funktionalisierung der freien Hydroxygruppen eines Polymers, z.B. eines Polyvinylalkohols durch eine Überführung in cyclische Acetale oder Ketale, die Donorfunktionalisierungen in Nebengruppen tragen, an die Übergangsmetallfragmente koordinativ gebunden werden können.

Die Vorteile dieses Aufbaus liegen z.B. darin, dass z.B. der als Polymer eingesetzte Polyvinylalkohol (PVA) ein kommerziell günstig verfügbares Polymermaterial ist und sich die weiteren Umsetzungen in einen größeren Maßstab überführen lassen, so dass auch größere Mengen eines auf PVA immobilisierten Katalysators hergestellt werden können. Insbesondere eignen sich diese Systeme für den Einsatz in der Grenzphasenkatalyse.

Außerdem erlauben die verschiedenen Wege der Immobilisierung des Katalysators auf dem Polymer eine Einstellung der Polarität des Polymer-gebundenen Katalysators in weiten Bereichen von hydrophil bis zu hydrophob, so dass der Katalysator an die gewünschten, optimalen Bedingungen angepasst werden kann.

Im folgenden wird die Erfindung anhand von Beispielen näher beschrieben:

Zur Herstellung eines Polymergerüsts mit daran gebundenen Übergangsmetallen wird Polyvinylalkohol (PVA), der Phosphin-Funktionalisierungen trägt, die durch Acetate oder Ketale an dem PVA-Gerüst gebunden sind, eingesetzt. Der prinzipielle Aufbau von Phosphino-funktionalisiertem PVA mit durch Acetalgruppen an das Polymer gebundenen Phosphinogruppen ist folgender, wobei unter Spacer jeweils Acetale oder Ketale zu verstehen sind:

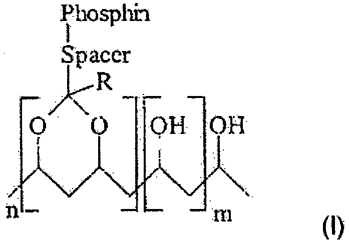

Die Modifikationen wurden an PVA mit einer Molmasse von 20000 durchgeführt und basieren dabei auf prinzipiell drei unterschiedlichen Synthesewegen, was eine hohe Variationsbreite des erreichten Acetalisierungs- bzw. Ketalisierungsgrades erlaubt, so dass Polymere mit unterschiedlichen Polaritäten von unpolar (hoher Acetalisierungs- bzw. Ketalisierungsgrad, n > m) bis zu polar (niedriger Acetalisierungs- bzw. Ketalisierungsgrad, m > n) dargestellt werden können.

Ziel der Herstellung war demgemäß ein Phosphino-funktionalisiertes PVA mit Koordination von Übergangsmetallfragment:

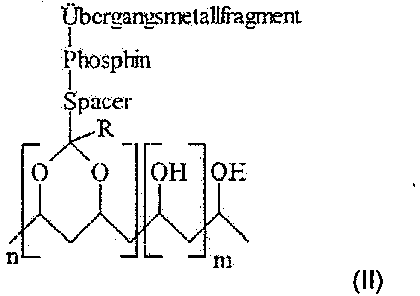

Als Beispiel für eine Komplexierungsreaktion wurde die Beladung von Phosphino-funktionalisiertem PVA mit [(COD)RhCl]₂ (COD: 1,5-Cyclooctadien) durchgeführt. Die Komplexierungsreaktion am Polymer verläuft quantitativ, es entstehen nur die oben genannten Komplexe II. mit einem (COD)RhCl-Baustein als Übergangsmetallfragment. In die Komplexierungsreaktionen können alle auf die verschiedenen Methoden dargestellten Polymere eingesetzt werden.

### Durchführung der Modifikation an PVA

Variante 1: Acetalisierung von PVA mit Chloracetaldehyd mit anschließender nukleophiler Substitution des Chlorids durch ein Phosphin:

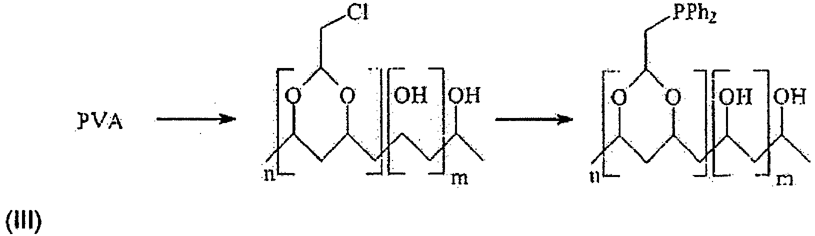

Die Acetalisierung des PVA kann Säure-katalysiert mit Chloracetaldehydhydrat in verschiedenen Solventien durchgeführt werden (Wasser, DMSO, THF). Die anschließende nukleophile Substitution des Chlorids gegen eine Diphenylphosphinogruppe wird in DMSO durch Umsetzung des mit Chloracetaldehyd acetalisierten PVA mit Diphenylphosphin in Gegenwart von Kaliumkarbonat und KOH als Base erreicht. Als einziges Phosphor-enthaltendes Produkt entsteht ein PVA, der an den Acetalgruppen mit Phosphinomethylgruppierungen substituiert ist.
Auf diese Weise werden Polymere mit einem geringen Acetalisierungsgrad zwischen 10 und 30 Prozent erhalten (n < m).

Variante 2: Acetalisierung von PVA mit Brombenzaldehydderivaten mit anschließender Umwandlung der Bromfunktionalisierung in eine Phosphinofunktionalisierung.
Die Acetalisierung des PVA wird mit Bromenbenzaldehydderivaten (am besten mit ihren entsprechenden Dimethylacetalen) in DMSO als Solvens durchgeführt. Auf diesem Weg kann das bei der Reaktion freiwerdende Methanol während der Reaktion destillativ abgetrennt werden. Die anschließende Substitution des Bromids gegen eine Phosphinogruppe wird nach Umwandlung der am Polymer verbliebenen freien Hydroxygruppen in Dimethylphenylsilylether als Schutzgruppen durch eine Metallierung am Aromaten und anschließender nukleophiler Substitution an Chlorphosphinen in THF erreicht. 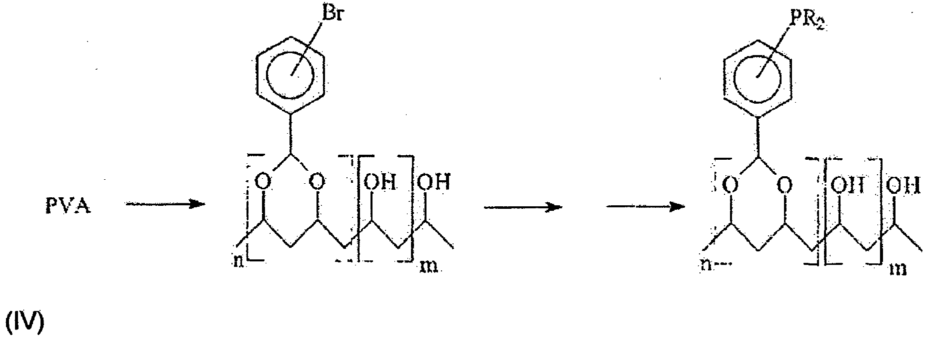 Als einzige Phosphor-enthaltende Produkte entstehen PVA-Derivate, die an den Acetalgruppen mit Phenylphosphinogruppierungen substituiert sind. Die Schutzgruppen an den freien Hydroxygruppen werden bei der Aufarbeitung nach der Substitution zum größten Teil (> 90 %) entfernt.

Auf diese Weise werden Polymere mit einem hohen Acetalisierungsgrad von etwa 70 Prozent erhalten (n > m).

Variante 3: Direkte Acetalisierung von PVA mit Phosphinobenzaldehydderivaten Anstelle einer Acetylisierung von PVA mit Brombenzaldehydderivaten kann PVA direkt in NMP als Lösungsmittel mit Phosphinobenzaldehydderivaten acetalisiert werden. Man erhält ein wie unter Variante 2) beschrieben analoges Polymer mit hohem Acetalisierungsgrad (etwa 70 Prozent, n > m). Als Phosphor-enthaltende Produkte entstehen PVA-Derivate, die an den Acetalgruppen mit Phenylphosphinogruppierungen substituiert sind (Abbildung 5).

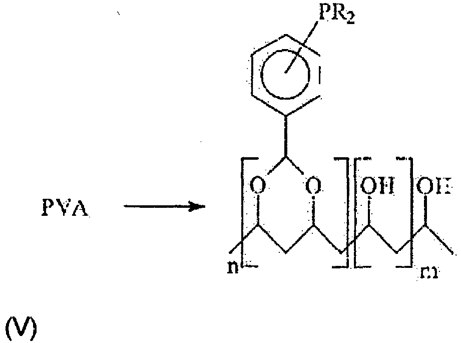

Hydroformylierung von Octen in Gegenwart katalytischer Mengen von mit [Rh(COD)Cl]₂ modifiziertem o-Diphenylphosphinobenzaldehydacetalisiertem PVA:
Katalysatormenge: 29.5 mg (~ 0.04 nmol Rh)
Octen: 4mmol
Solvens: 50 ml Toluol
Partialdruck Wasserstoff: 35 bar (~ 45 mmol H₂)
Partialdruck Kohlenstoffmonoxid: 35 bar (- 45 mmol CO)
Reaktionstemperatur: 65°C
Reaktionsdauer: 18 h
Analytik: (GC-MS, GC-IR, GC-CI/MS):
   Beobachtete Selektivitäten:
      Umsatz: >99%
      n-Nonanal: ~ 48% (vco: 1738 cm⁻¹, (M+1)⁺: 10%)
      i-Nonanal: ~ 38% (vco: 1738 cm⁻¹, (M+1)⁺: 20%)
      2-Ethylheptanal: ~ 7% (vco: 1735 cm⁻¹, (M+1)⁺: 5%)
      3-Propylhexanal: ~ 3% (vco: 1735 cm⁻¹, (M+1)⁺: 5%)
      Alkohole: nicht festgestellt
      Octan: - 2%
      Nicht näher identifizierte Nebenprodukte: - 2%

### Beispiel für eine Acetalisierung von PVA mit Chloracetaldehydhydrat gemäß Variante 1:

22.7 g PVA (Molmasse 22000) werden in 530 ml siedendem Wasser für eine Stunde gerührt. Man lässt das Gemisch unter Rühren auf 40°C abkühlen. Nach Zugabe von 10 ml verdünnter Salzsäure werden bei 40°C 50 ml Chloracetaldehydrat über einen Tropftrichter zugegeben. Man rührt für 18 Stunden bei 60°C und erhält eine klare Reaktionslösung. Das Lösungsmittel wird am Rotationsverdampfer entfernt und der Rückstand im Ölpumpenvakuum über P₄O₁₀ getrocknet.
Man erhält 26.4 g eines gelben, polymeren Feststoffs mit einem Chlorgehalt von 7.9%.

### Beispiel für eine Phosphino-Funktionalisierung gemäß Variante 1:

Zu einer Suspension von 25.50 g (184.5 mmol) Kaliumcarbonat, 6.461 g (34.7 mmol) Diphenylphosphin und 2.5 ml einer wässrigen 16.5 N Kaliumhydroxidlösung in 30 ml DMSO wird eine Lösung von 13.14 g des mit Chloracetaldehyd acetalisierten PVAs in 60 ml DMSO tropfenweise zugesetzt. Man lässt 68 h bei 100°C rühren, entfernt dann das Lösemittel im Vakuum und extrahiert das Polymer jeweils 65 h mit Wasser und mit THF.

³¹P[¹H]-Festkörper-NMR (162 MHz, 29°C) :δ (ppm) = -23 (s (br.)).
Chlorwert Edukt: 79.9 mg/g Polymer
Chlorwert Produkt: 6.3 mg/g Polymer
IR (KBr, fest, ν in cm⁻¹): 3070, w. 3051, w. ν(Ar-H); 2942, m, 2914, m, 2865, m, ν(CH₂, CH); 1957, w, 1888, w, 1814, w, 1765, w, Ober- und Kombinationsschwingungen von p_{wag}(Ar-H); 1585, w, 1571, w, 1482, w, ν (C=C); 1120, ss (sh.), v(COC); 740, ss, 695, ss, p_{wag}(Ar-H).

Beispiel für eine Umacetalisierungsreaktion von p-Brombenzaldehyddimethylacetal an PVA nach Variante 2:
Umacetalisierung von p-Brombenzaldehyddimethylacetal auf PVA

Zu einer Lösung von 11.6 g (50 mmol) p-Brombenzaldehyddimethylacetal in 100 ml DMSO werden 4.3 g PVA hinzugefügt. Nach Zusatz katalytischer Mengen gasförmiger Salzsäure wird 16 h bei 110°C gerührt, wobei das Methanol aus der Lösung destillativ entfernt wird. Dann wird die Lösung eingeengt, und durch Zusatz von alkalischen Methanols wird das Polymer ausgefällt. Es wird jeweils 16 h mit Wasser, Pentan und dann mit Diethylether über Calciumhydrid extrahiert. Es werden 8.8 g acetalisiertes Polymer erhalten.

IR (KBr, fest, ν in cm⁻¹): 3065, w, ν(Ar-H); 2943, m, 2913, m, 2864, m, ν(CH₂ CH); 1596, m, 1490, m, ν (C=C); 1119, ss, 1067, ss, 1012, ss, ν(COC); 807, m, P_{wag}(Ar-H).
¹H-NMR (250 MHz, d-THF, 300 K):
δ (ppm) = 1.06-2.13 (m (br.), CH₂, 4.26 (s (sh., br.)), OCHR), 5.67 (s (br.), CHO₂), 5.97 (s (br.), CHO₂), 7.55 (s (br.), Ar-H), 7.62 (s (br), Ar-H).

### Beispiel für die Einführung von Schutzgruppen an den freien Hydroxygruppen des PVA's gemäß Variante 2:

### Silylierung der Hydroxygruppen am p-Brombenzaldehydfunktionalisiertem PVA

In einer Lösung von 13.2 g acetalisiertem PVA und 11.1 g (81 nmol) Dimethylphenylsilan in 300 ml THF werden katalytische Mengen einer 1 mol Lösung von Tetrakis (n-butyl) ammoniumfluorid in THF hinzugefügt und 17 h bei 80°C gerührt. Nach dem Einengen des Lösemittels und der Zugabe von Pentan fällt das Polymer aus. Nach einer 24-stündigen Extraktion mit Pentan werden 12.0 g des sililierten Polymers erhalten.

IR (KBr, fest, ν in cm⁻¹): 3070, w, ν(Ar-H); 2945, m, 2918, m, ν (CH₂, CH); 1596, m, 1492, m, ν(C = C); 1117,ss, 1068, ss, 1013, ss, ν(COC); 807, m, P_{wag}(Ar-H).
¹H-NMR (250 MHz, CDCl₃, 300 K):
δ (ppm) = 0.88 (s, SiCH₃), 0.97 (s, SiCH₃), 1.27 - 2.04 (m (br.), CH₂, CH), 4.14 (s. (br.), OCHR), 4.55 (s (br.), OCHR), 5.49 (s (br.), CHO₂), 5.71 (s (br.), CHO₂), 7.33 (s (br.), Ar-H), 7.47 (s (br), Ar-H).

### Beispiel für die Umwandlung der Bromfunktionalisierung in eine Phosphinofunktionalisierung gemäß Variante 2:

Substitution des Bromids durch Diphenylphosphin am silylierten, p-Brombenzaldehyd-funktionalisiertem PVA

Zu einer Lösung von 648.8 mg des silylierten Polymers in 80 ml THF werden bei 80°C 3.4 ml (9.2 mmol) einer 2.7 N n-BuLi Lösung in Heptan tropfenweise zugeführt. 4.84 g (22 mmol) Chlordiphenylphosphin hinzu und lässt die Lösung langsam auf Raumtemperatur erwärmen. Dann wird die Lösung eingeengt und das Polymer durch Zugabe von Diethylether ausgefällt und mit basischem Methanol gewaschen. Nach einer jeweils 16 stündigen Extraktion mit Methanol, Pentan und Diethylether über Calciumhydrid werden 553 mg phosphinofunktionalisierten Polymers erhalten.

IR (KB, fest, ν in cm⁻¹): 3069, w, 3052, w, ν(Ar-H); 2944, m, 2914, m, 2861, m, ν (CH₂, CH); 1595, m, 1491, m, 1479, m, v (C = C); 1118, ss, 1068, s, 1011, ss, ν (COC); 810, m, 742, s, 695, ss, p_{wag,} (Ar-H); 505, m, Gerüst PP₃. ³¹P-NMR (101 MHz, d-THF, 300 K):
δ (ppm)) - 6.61 (s).
¹H-NMR (250 MHz, d-THF, 300 K):
δ (ppm) = 0.88 (s, SiCH₃), 1.13-2.04 (m (br.); CH₂, CH), 4.08 (s (br.), OCHR), 4.43 (s (br.), OCHR), 5.48 (s (br.), CHO₂), 5.78 (s (br.), CHO₂), 7.26 (s (br), Ar-H).

Beispiel für die Immobilisierung von [RhCODCl]₂ auf p-Diphenylphosphinobenzaldehyd acetalisiertem PVA nach Variante 2:
Zu einer Lösung von 71 mg des p-Diphenylphosphinobenzaldehyd funktionalisierten PVA's in 40 ml THF werden 180 mg (0.4 mmol) [RhCODCl]₂ gegeben. Man lässt 12 h bei Raumtemperatur rühren, entfernt dann das Lösemittel im Vakuum und extrahiert das Polymer 24 h mit Diethylether. Man erhält 78 mg rhodiumbeladenes PVA.

IR (KBr, fest, ν in cm⁻¹): 3053, w, ν(Ar-H); 2940, m, 2913, m, 2869, m, 2828, m, ν(CH₂, CH); 1594, w, 1573, w, 1482, w, 1436, m, v (C = C); 1116, ss, 1068, s, 1011, ss, ν(COC); 810, m, 748, m, 695, ss, p_{wag}(Ar-H); 538, m, Gerüst PPh₃. FIR (PE, fest, v in cm⁻¹): 285, m, ν(Rh-CI).
31 P-NMR (101 MHZ, CDCl₃, 300 K):
   δ (ppm) = 31.6 (s (br.)).

### Beispiel für eine Arbeitsvorschrift nach Variante 3:

### Umacetalisierung von p-Diisopropylphosphino-benzaldehyddimethylacetal auf PVA

In eine Lösung von 437 mg (5.0 mmol bezogen auf das 1,3-Diol-Monomer) PVA (22.000) und 1.344 g (5.0 mmol) p-Diisopropylphosphinobenzaldehyddimethylacetal in 15 ml NMP wird gasförmige Salzsäure eingeleitet, die aus 645 mg NaCl und konzentrierter Schwefelsäure gewonnen wird. Man rührt 15 h bei 115°C und destilliert das Methanol aus der Lösung heraus. Nach dem Entfernen des Lösemittels werden die Säurereste mit einer Lösung von 1.1 g (20 mmol) KOH in 25 ml H₂O abgefangen. Das basische Polymer wird über jeweils 24 h mit H₂O, mit Pentan und dann mit Diethylether über Calciumhydrid extrahiert. Nach den Extraktionen wird das schwach gelb gefärbte Polymer bei 80°C bei 1 mbar getrocknet. Es werden 803 mg phosphino-funktionalisiertes PVA erhalten.

IR (KBr, fest, ν in cm⁻¹): 3078, w, 3027, w, ν(Ar-H); 2949, s, 2922, s, 2866, s, ν (CH₃, CH₂, CH); 1462, m, 1380, ν(CH₃, CH₂, CH); 1117, s, 1058, s, 1018, s, ν (COC); 813, m, p_{wag}(Ar-H).
³¹P-NMR (101 MHz, CDCl₃, 300 K): δ (ppm) = 11.3 (s).
¹H-NMR (250 MHz, CDCl₃, 300 K): δ (ppm) = 0.9 (s (br.), CH₃), 1.1 (s (br.), CH₃), 1.6 -2.8 (m, CH₂ PCH) 4.3 (s (sh., br.), OCHR), 5.6 (s (br.), CO₂H), 5.8 (s (br.), CO₂H), 7.5 (s(br.), Ar-H).

### Beispiel für eine Komplexierungsreaktion an dem nach Variante 3 hergestelltem Polymer:

Immobilisierung von [RhCODCL₂] auf dem mit p-Diisopropylphosphinobenzal-dehyd acetalisiertem PVA

Zu einer Lösung von 218 mg phosphinofunktionalisierten PVA in 60 ml THF werden 339 mg (0.7 mmol) [RhCODCI]₂ hinzugegeben und lässt über 12 h bei Raumtemperatur rühren. Dann wird das Lösemittel entfernt und das Polymer mit Diethylether über 18 h extrahiert. Man erhält 249 mg gelb gefärbtes Polymer.

IR (KBr, fest, ν in cm⁻¹): 3034, w, ν(Ar-H); 2941, s, 2913, s, 2867, 2830, s, ν (CH₃, CH₂, CH); 1596,m, 1492, m, ν(C=C); 1389, s, ν(CH₃, CH₂, CH); 1119, ss, 1067, s, 1011, ss, ν(COC); 809, s, p_{wag,} (Ar-H).
FIR (PE, ν in cm⁻¹): 284, s, ν (Rh-Cl).
³¹P-NMR (101 MHz, CDCl₃, 300 K):
δ (ppm) = 39.85 (d, ¹ J (P, Rh) = 148 Hz).

## Patentansprüche

1. Polymergerüste mit gebundenen Übergangsmetallen **dadurch gekennzeichnet, dass** die Polymergerüste hydroxygruppenhaltige Polymere aufweisen, deren freie Hydroxylgruppen zumindest teilweise zu cyclischen Acetalen oder Ketalen, welche Donorfunktionalisiert sind, umgesetzt sind, und dass die Übergangsmetalle über die Donorfunktion an das Polymer gebunden sind, wobei die Donorfunktionen Phosphino-Gruppen sind.

2. Polymergerüste nach Anspruch 1 **dadurch gekennzeichnet, dass** die hydroxylgruppenhaltigen Polymere Polyvinylalkohol sind.

3. Verfahren zur Herstellung von Polymergerüsten mit daran gebundenen Übergangsmetallen **dadurch gekennzeichnet, dass** ein freie Hydroxylfunktionen enthaltendes Polymer wenigstens teilweise mit Aldehyden, welche wenigstens eine Donorfunktion aufweisen, und danach mit Übergangsmetallen umgesetzt werden, wobei als Donorfunktionen Phosphino-Gruppen eingesetzt werden.

4. Verfahren nach Anspruch 3 **dadurch gekennzeichnet, dass** als OH-Funktionen enthaltendes Polymer Polyvinylalkohol eingesetzt wird.

5. Verfahren nach einem der Ansprüche 3 oder 4 **dadurch gekennzeichnet, dass** das Gerüstpolymer mit einem Aldehyd, welches wenigstens eine Halogenfunktion aufweist, umgesetzt und anschließend eine nucleophile Substitution des Halogens durch die Donorfunktion tragende Komponente erfolgt.

6. Verwendung der Polymergerüste nach einem der Ansprüche 1 oder 2 mit daran gebundenen Übergangsmetallen als Katalysatoren.

## Claims

1. Polymer scaffolds comprising bound transition metals, **characterized in that** the polymer scaffolds comprise hydroxyl group-containing polymers wherein at least some of the free hydroxyl groups have been converted to donorfunctionalized cyclic acetals or ketals, and **in that** the transition metals are bound to the polymer via the donor function, wherein the donor functions are phosphino groups.

2. Polymer scaffolds according to Claim 1, **characterized in that** the hydroxyl group-containing polymers are polyvinyl alcohol.

3. Process for preparing polymer scaffolds having transition metals bound thereto, **characterized in that** a free hydroxyl function-containing polymer is reacted at least in part with aldehydes that have at least one donor function and subsequently with transition metals, wherein the donor functions used are phosphino groups.

4. Process according to Claim 3, **characterized in that** the OH function-containing polymer used is polyvinyl alcohol.

5. Process according to either of Claims 3 or 4, **characterized in that** the scaffold polymer is reacted with an aldehyde having at least one halogen function and subsequently a nucleophilic substitution of the halogen for the component bearing the donor function is effected.

6. Use of the polymer scaffolds according to either of Claims 1 or 2 having transition metals bound thereto as catalysts.

## Revendications

1. Structures polymères présentant des métaux de transition liés, **caractérisées en ce que** les structures polymères présentent des polymères contenant des groupes hydroxy, dont les groupes hydroxyle libres sont transformés au moins partiellement en acétals ou cétals cycliques, qui sont fonctionnalisés par des donneurs, et **en ce que** les métaux de transition sont liés via la fonction de donneur au polymère, les fonctions de donneur étant des groupes phosphino.

2. Structures polymères selon la revendication 1, **caractérisées en ce que** les polymères contenant des groupes hydroxyle sont un poly(alcool vinylique).

3. Procédé pour la préparation de structures polymères présentant des métaux de transition qui y sont liés, **caractérisé en ce qu'**un polymère contenant des fonctions hydroxyle libres est transformé au moins partiellement avec des aldéhydes, qui présentent au moins une fonction de donneur, et ensuite avec des métaux de transition, en utilisant, comme fonctions de donneur, des groupes phosphino.

4. Procédé selon la revendication 3, **caractérisé en ce qu'**on utilise, comme polymère contenant des fonctions OH, un poly(alcool vinylique).

5. Procédé selon l'une quelconque des revendications 3 ou 4, **caractérisé en ce que** le polymère de structure est transformé avec un aldéhyde, qui présente au moins une fonction halogène et on réalise ensuite une substitution nucléophile de l'halogène par le composant portant la fonction de donneur.

6. Utilisation des structures polymères selon l'une quelconque des revendications 1 ou 2 présentant les métaux de transition qui y sont liés comme catalyseurs.
